(19) Europäisches Patentamt / European Patent Office / Office européen des brevets

(11) EP 4 478 107 A1

(12) EUROPEAN PATENT APPLICATION
published in accordance with Art. 153(4) EPC

(43) Date of publication:
18.12.2024 Bulletin 2024/51

(51) International Patent Classification (IPC):
$G02B\ 13/06$ (2006.01)  $G02B\ 13/18$ (2006.01)
$G02B\ 9/60$ (2006.01)  $G02B\ 11/30$ (2006.01)

(21) Application number: 23752236.2

(22) Date of filing: 17.01.2023

(86) International application number:
PCT/CN2023/072520

(87) International publication number:
WO 2023/151456 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.02.2022 CN 202210130287

(71) Applicant: Jiangxi Lianchuang Electronic Co.,
Ltd.
Nanchang, Jiangxi 330096 (CN)

(72) Inventors:
• LING, Bingbing
  Nanchang, Jiangxi 330096 (CN)
• BAO, Yumin
  Nanchang, Jiangxi 330096 (CN)
• ZHUANG, Linfan
  Nanchang, Jiangxi 330096 (CN)
• WANG, Kemin
  Nanchang, Jiangxi 330096 (CN)

(74) Representative: SONN Patentanwälte GmbH & Co
KG
Riemergasse 14
1010 Wien (AT)

(54) **OPTICAL IMAGING LENS**

(57) An optical imaging lens (100). The optical imaging lens (100) sequentially comprises, from an object side to an image surface along an optical axis: a first lens (L1) having negative focal power, an object side surface (S1) of the first lens (L1) being a convex surface, and an image side surface (S2) of the first lens being a concave surface; a second lens (L2) having positive focal power, an image side surface (S4) of the second lens (L2) being a convex surface; a diaphragm (ST); a third lens (L3) having positive focal power, an object side surface (S5) and an image side surface (S6) of the third lens (L3) both being convex surfaces; a fourth lens (L4) having positive focal power, an object side surface (S7) and an image side surface (S8) of the fourth lens (L4) both being convex surfaces; and a fifth lens (L5) having negative focal power, an object side surface (S9) of the fifth lens (L5) being a concave surface, an image side surface (S 10) of the fifth lens (L5) being a convex surface, and the fourth lens (L4) and the fifth lens (L5) constituting a cemented lens. The optical imaging lens (100) has advantages of being large in aperture, large in wide angle, small in volume, and high in resolution, and has a special form of distortion, such that the use requirements of an ADAS system can be satisfied better.

FIG. 1

EP 4 478 107 A1

**Description**

CROSS REFERENCE TO RELATED APPLICATION

This application claims priority to Chinese Application No. 202210130287.4, filed on February 11, 2022, which is hereby incorporated by reference in its entirety for all purposes.

TECHNICAL FIELD

This disclosure relates to the technical field of imaging lens, and, in particular, to an optical imaging lens.

BACKGROUND

With people's increasing requirements for driving safety and the constant improvement of Advanced Driving Assistance System (ADAS) technology, there has been an explosive growth in the market demand for vehicle-mounted cameras. By means of vehicle-mounted lenses carried on a vehicle for a front view, a rear view, a panoramic view, etc., the omnidirectional information about the inside and outside of the vehicle can be acquired, thereby assisting the driver to conduct correct driving behaviors. Hence, the adaptability of lenses to the environment and the stability of imaging have become safety guarantees during the running of an automobile.

An ADAS system raises extremely high requirements for the vehicle-mounted lenses as carried. First, they are required to have the strong light transmission capability and can adapt to brightness changes in the external environment. Also, the lenses are required to have a high imaging definition and can effectively distinguish details about the road environment. Meanwhile, it is required that the lenses can have a larger field of view to better collect road information in front of the vehicle, in order to meet the special requirements of the intelligent driving system. At the same time, due to the limited space for mounting the on-board systems, the lenses for use in the vehicle, as required, cannot be too large in volume. However, most lenses in the existing market cannot fulfill the aforesaid requirements well. Therefore, it is urgent to develop an optical lens that achieves a large aperture, miniaturization, a high resolution, and a great wide angle, and can cooperate with ADAS.

SUMMARY

To this end, the objective of this disclosure is to provide an optical imaging lens having advantages such as a large aperture, a great wide angle, a small volume, and a high resolution, and also possessing a special form of distortion, thereby being capable of better meeting the use requirements of an ADAS system.

The embodiments of this disclosure achieve the aforesaid objective by the following technical solutions.

One aspect of this disclosure provides an optical imaging lens that, from an object side to an imaging plane along an optical axis, sequentially includes: a first lens having a negative focal power, the object side surface thereof being convex, and the image side surface thereof being concave; a second lens having a positive focal power, the image side surface thereof being convex; a third lens having a positive focal power, the object side surface and the image side surface thereof both being convex; a fourth lens having a positive focal power, the object side surface and the image side surface thereof both being convex; and a fifth lens having a negative focal power, the object side surface thereof being concave and the image side surface thereof being convex, and the fourth lens and the fifth lens being combined to form a cemented lens.

Another aspect of this disclosure provides an optical imaging lens that, from an object side to an imaging plane along an optical axis, sequentially includes: a first lens having a negative focal power; a second lens having a positive focal power; a third lens having a positive focal power; a fourth lens having a positive focal power; and a fifth lens having a negative focal power, the fourth lens and the fifth lens being combined to form a cemented lens; wherein the first lens is an aspheric lens, the object side surface thereof being convex in the vicinity of the optical axis and being concave away from the optical axis, and the first lens satisfies the conditional expression: $0.6 < R1/(R2+d1) < 1.2$; where R1 represents a radius of curvature of the object side surface of the first lens, R2 represents a radius of curvature of the image side surface of the first lens, and d1 represents a center thickness of the first lens.

Compared with the prior art, an optical imaging lens in accordance with this disclosure provides a special form of distortion for the lens because of a special aspheric surface configuration adopted in the first lens, significantly increasing the distortion of the lens within the range of a small field of view, and being more conducive to meeting the special algorithm requirements of the vehicle-mounted system. Moreover, due to reasonable arrangement of the focal powers and surface configurations of the five lenses as used, the lens is allowed to have a larger field of view and a smaller diameter. While the resolution capability is improved to the lens as an entire group, the lens is also given the large-aperture characteristic. Under the use condition where a particular chip is combined therewith, for example, in a design of blue light removal, the system achieves the high imaging quality with a smaller number of lenses, meeting the demands for practical applications while also saving the manufacturing costs, and this is in line with the promotion and implementation of mass production.

BRIEF DESCRIPTION OF THE DRAWINGS

The foregoing and/or additional aspects and advantages of this disclosure will become apparent and readily understood from the following description of the embodiments in view of the drawings, in which:

FIG. 1 is a structural schematic diagram of an optical imaging lens in accordance with a first embodiment of this disclosure;

FIG. 2 is a distortion graph of the optical imaging lens in accordance with the first embodiment of this disclosure;

FIG. 3 is a structural schematic diagram of an optical imaging lens in accordance with a second embodiment of this disclosure;

FIG. 4 is a distortion graph of the optical imaging lens in accordance with the second embodiment of this disclosure;

FIG. 5 is a structural schematic diagram of an optical imaging lens in accordance with a third embodiment of this disclosure;

FIG. 6 is a distortion graph of the optical imaging lens in accordance with the third embodiment of this disclosure;

FIG. 7 is a structural schematic diagram of an optical imaging lens in accordance with a fourth embodiment of this disclosure; and

FIG. 8 is a distortion graph of the optical imaging lens in accordance with the fourth embodiment of this disclosure.

DETAILED DESCRIPTION

To make the objective, features, and advantages of this disclosure obvious and understandable, the specific modes of implementation of this disclosure will be described below in detail with reference to the drawings. Several embodiments of this disclosure are illustrated in the drawings. However, this disclosure may be implemented in many different forms, and is not limited to the embodiments described herein. Rather, these embodiments are provided for the purpose of making the disclosure of this disclosure more thorough and complete.

Unless defined otherwise, all the technical and scientific terms used herein carry the same meaning as commonly understood by those skilled in the field to which this disclosure belongs. The terms are used in the specification of this disclosure only for the purpose of describing specific embodiments, instead of imposing limitations on this disclosure. Like reference signs refer to like elements throughout the specification.

This disclosure provides an optical imaging lens that, from an object side to an imaging plane along an optical axis, sequentially includes:

a first lens having a negative focal power, the object side surface thereof being convex, and the image side surface thereof being concave;

a second lens having a positive focal power, the image side surface thereof being convex;

a stop;

a third lens having a positive focal power, the object side surface and the image side surface thereof both being convex;

a fourth lens having a positive focal power, the object side surface and the image side surface thereof both being convex; and

a fifth lens having a negative focal power, the object side surface thereof being concave and the image side surface thereof being convex.

In some modes of implementation, the object side surface of the second lens is concave.

In some modes of implementation, the object side surface of the second lens is convex.

In some modes of implementation, the fourth lens and the fifth lens are combined to form a cemented lens.

In some modes of implementation, the first lens is an aspheric lens, the object side surface thereof being convex in the vicinity of the optical axis and being concave away from the optical axis, that is, a point of reverse curvature being arranged on the object side surface of the first lens. Within the effective diameter of the image side surface of the first lens, the shape of the lens is similar to a concentric ring. In an area beyond the effective diameter of the image side surface of the first lens, the inclination angle value of the object side surface of the first lens decreases continuously, so that the surface configuration of the object side surface of the first lens gradually become smooth and exhibit a phenomenon of reverse curvature. By adopting such a special aspheric surface configuration in the first lens, this not only achieves a wide field of view in the system, but also greatly corrects the distortion of the system and significantly improves the aberration at an edge field of view. Since the special aspheric surface configuration is adopted in the first lens, this provides a special form of distortion for the lens, distinctively increasing the distortion within the range of a small field of view, and being more conducive to meeting the special algorithm requirements of the vehicle-mounted system.

In some modes of implementation, the optical imaging lens satisfies the conditional expression below:

$$0.6 < R1/(R2+d1) < 1.2; (1)$$

where R1 represents a radius of curvature of the object side surface of the first lens, R2 represents a radius of curvature of the image side surface of the first lens, and d1 represents a center thickness of the first lens. By satisfying the conditional expression (1) above, the surface configuration of the first lens in the vicinity of the optical axis is provided as a shape similar to a concentric circle, thereby allowing the light beams passing through the first lens to be distributed more evenly, which is conducive to reasonable allocation of the deflection angles of the light beams at the front end of the lens, and gives the entire system the wide-angle characteristic.

In some modes of implementation, the optical imaging lens satisfies the conditional expression below:

$$1 < |R7/R8| < 2.5; (2)$$

where R7 represents a radius of curvature of the object side surface of the fourth lens, and R8 represents a radius of curvature of the image side surface of the fourth lens. By satisfying the conditional expression (2) above, a particular layout of a biconvex surface configuration is reasonably arranged for the fourth lens, which is conducive to correction to the deflection angles of the light beams, and effective improvement to the achromatic capability of the dual cemented lens in this system.

In some modes of implementation, the optical imaging lens satisfies the conditional expression below:

$$0.11 < BFL/TTL < 0.16; (3)$$

where BFL represents a distance from the image side surface of the fifth lens to the imaging plane on the optical axis, and TTL represents a total track length of the optical imaging lens. By satisfying the conditional expression (3) above, the total track length of the lens can be effectively controlled by reasonably controlling the relationship between the optical back focal length and the total track length of the lens, thereby achieving the miniaturization feature in the lens.

In some modes of implementation, the optical imaging lens satisfies the conditional expression below:

$$0 < R1/f < 1; (4)$$

where f represents a focal length of the optical imaging lens, and R1 represents a radius of curvature of the object side surface of the first lens. By satisfying the conditional expression (4) above, an effective focal length is ensured while the light beams entering the first lens are distributed more evenly, which is conducive to reasonable allocation of deflection angles of the light beams at the front end of the lens, thereby improving the imaging quality.

In some modes of implementation, the optical imaging lens satisfies the conditional expression below:

$$0.3 < d4/d5 < 1.5; (5)$$

where d4 represents a center thickness of the fourth lens, and d5 represents a center thickness of the fifth lens. By satisfying the conditional expression (5) above, the achromatic capability of the cemented lens can be effectively improved by reasonably arranging a thickness ratio between the convex and concave single lenses in the cemented lens formed by combining the fourth and fifth lenses, which allows the light beams passing through the cemented lens to enter the image plane more evenly, thereby improving the imaging quality.

In some modes of implementation, the optical imaging lens satisfies the conditional expression below:

$$0.8 < d1/d12 < 1.2; \; (6)$$

where d1 represents a center thickness of the first lens, and d12 represents an air spacing between the first lens and the second lens on the optical axis. By satisfying the conditional expression (6) above, the air spacing between the two lenses in front of the stop and the thickness are controlled, which is conducive to reduction of the tolerance sensitivity between the first and second lenses, and improvement to the assembly yield of the lens.

In some modes of implementation, the optical imaging lens satisfies the conditional expression below:

$$0.10 < d1/TTL < 0.15; \; (7)$$

where d1 represents a center thickness of the first lens, and TTL represents a total track length of the optical imaging lens. By satisfying the conditional expression (7) above, the center thickness of the first lens can be reasonably allocated, thereby achieving the miniaturization feature in the lens.

In some modes of implementation, the optical imaging lens satisfies the conditional expression below:

$$0.21 < d2/TTL < 0.3; \; (8)$$

where d2 represents a center thickness of the second lens, and TTL represents a total track length of the optical imaging lens. By satisfying the conditional expression (8) above, the light beams entering the stop can be made smoother by reasonably arranging the center thickness of the second lens, which is conducive to improvement to the imaging quality of the lens while achieving miniaturization in the lens.

In some modes of implementation, the optical imaging lens satisfies the conditional expression below:

$$0.11 < d3/TTL < 0.2; \; (9)$$

where d3 represents a center thickness of the third lens, and TTL represents a total track length of the optical imaging lens. By satisfying the conditional expression (9) above, the deflection angles of the light beams emergent from the stop entering the cemented lens after being refracted by the third lens can be reduced by reasonably arranging the center thickness of the third lens, which is conducive to correction to the distortion and astigmatism of the lens, and also improvement to the resolution of the lens while achieving miniaturization in the lens.

In some modes of implementation, the optical imaging lens satisfies the conditional expression below:

$$-3.0 < f1/f < -2.0; \; (10)$$

where f1 represents a focal length of the first lens, and f represents a focal length of the optical imaging lens. By satisfying the conditional expression (10) above, the first lens bears a larger negative refraction power in the system, which can effectively correct the distortion and astigmatism of the lens, and improve the resolution of the lens.

In some modes of implementation, the optical imaging lens satisfies the conditional expression below:

$$3.0 < f2/f < 5.5; \; (11)$$

where f2 represents a focal length of the second lens, and f represents a focal length of the optical imaging lens. By satisfying the conditional expression (11) above, a ratio of the focal length of the second lens is reasonably arranged, which can effectively correct the field curvature and astigmatism of the lens, and improve the resolution of the lens.

In some modes of implementation, the optical imaging lens satisfies the conditional expression below:

$$-2.0 < f5/f < -1.6; \; (12)$$

where f5 represents a focal length of the fifth lens, and f represents a focal length of the optical imaging lens. By satisfying the conditional expression (12) above, the focal length of the last one lens is reasonably arranged, which can effectively correct the field curvature and spherical aberration of the lens, and improve the resolution of the lens.

In some modes of implementation, the optical imaging lens satisfies the conditional expression below:

$$-0.9 < f4/f5 < -0.5; (13)$$

where f4 represents a focal length of the fourth lens, and f5 represents a focal length of the fifth lens. By satisfying the conditional expression (13) above, a ratio of the focal length of the cemented lens formed by combining the fourth and fifth lenses is reasonably arranged, which can effectively improve the achromatic capability of the fourth and fifth lenses, and allow the light beams passing through the cemented lens to enter the image plane more evenly, thereby improving the imaging quality.

In some modes of implementation, the optical imaging lens satisfies the conditional expression below:

$$4.5 < TTL/f < 6; (14)$$

where TTL represents a total track length of the optical imaging lens, and f represents a focal length of the optical imaging lens. By satisfying the conditional expression (14) above, under the condition of a fixed focal length, the total length of the lens can be effectively limited, so that the lens has a smaller volume.

In some modes of implementation, the optical imaging lens satisfies the conditional expression below:

$$0.35 \text{mm}^{-1} < D1/(IH \times f) < 0.5 \text{mm}^{-1}; (15)$$

where D1 represents the maximum effective half diameter of the first lens, IH represents an image height corresponding to the half field of view of the optical imaging lens, and f represents a focal length of the optical imaging lens. By satisfying the conditional expression (15) above, a balance between the wide field of view and the small diameter can be better achieved in the lens.

In some modes of implementation, the optical imaging lens satisfies the conditional expression below:

$$1.5 < R1/R2 < 3; (16)$$

where R1 represents a radius of curvature of the object side surface of the first lens, and R2 represents a radius of curvature of the image side surface of the first lens. By satisfying the conditional expression (16) above, this is conducive to reasonable arrangement of the surface configuration of the first lens, making the light beams passing through the first lens distributed more evenly, and better achieving the wide-angle characteristic in the lens.

In an exemplary mode of implementation, this application also provides an optical imaging lens that, from an object side to an imaging plane along an optical axis, sequentially includes:

a first lens having a negative focal power;

a second lens having a positive focal power;

a stop;

a third lens having a positive focal power;

a fourth lens having a positive focal power; and

a fifth lens having a negative focal power, the fourth lens and the fifth lens being combined to form a cemented lens;

wherein the first lens is an aspheric lens, the object side surface thereof being convex in the vicinity of the optical axis and being concave away from the optical axis, and the first lens satisfies the conditional expression: 0.6<R1/(R2+d1) <1.2, where R1 represents a radius of curvature of the object side surface of the first lens, R2 represents a radius of curvature of the image side surface of the first lens, and d1 represents a center thickness of the first lens. Within the effective diameter of the image side surface (surface R2) of the first lens, the shape of the lens is similar to a concentric ring. In an area beyond the effective diameter of the surface R2, the inclination angle value of the object side surface (surface R1) of the first lens decreases continuously, so that the surface configuration of the surface R1 gradually become smooth and exhibit a phenomenon of reverse curvature. By adopting such a special aspheric surface configuration in the first lens, this not only achieves a wide field of view in the system, but also greatly corrects the distortion of the system and significantly improves the aberration at an edge field of view.

Further, the optical imaging lens satisfies the conditional expression below:

$$0 < R1/f < 1;$$

where f represents a focal length of the optical imaging lens, and R1 represents a radius of curvature of the object side surface of the first lens. Since the aspheric surface configuration is adopted in the first lens, this provides a special form of distortion for the lens, distinctively increasing the distortion within the range of a small field of view, and being more conducive to meeting the special algorithm requirements of the vehicle-mounted system.

To better correct the aberration of the system, the optical imaging lens includes at least one aspheric lens. Preferably, the first lens is an aspheric lens, which can provide a large field of view and a special form of distortion for the system; and the third lens may adopt either an aspheric lens or a spheric lens. The characteristic of an aspheric lens is that the curvature changes continuously from the center to the edge of the lens. Unlike the constant curvature characteristic of a spheric lens, an aspheric lens has better curvature radius characteristics, and gains the advantages of improving field curvature aberration, distortion aberration, and astigmatism aberration. After an aspheric lens is adopted, the aberration that occurs during imaging can be eliminated as much as possible, thereby improving the imaging quality of the lens. In specific applications, the number of aspheric lenses in the optical imaging lens can be appropriately added or reduced according to the need for image resolution.

This disclosure will be further explained below in multiple embodiments. In various embodiments, the lenses in the optical imaging lens are different from each other in thickness, radius of curvature, and material selection. The specific differences can be referred to in the parameter table of each embodiment. The following embodiments are only some preferred modes of implementation of this disclosure, but the modes of implementation of this disclosure are not limited just by the following embodiments. Any other changes, substitutions, combinations, or simplifications that do not depart from the innovative gist of this disclosure should be considered equivalent modes of replacement, and be included within the scope of protection of this disclosure.

In various embodiments of this disclosure, when a lens in the optical imaging lens is an aspheric lens, the aspheric surface configuration satisfies the following equation:

$$z = \frac{ch^2}{1 + \sqrt{1 - (1+K)c^2h^2}} + Bh^4 + Ch^6 + Dh^8 + Eh^{10} + Fh^{12}$$

where z represents a distance between a curved surface and the apex of the curved surface in the optical axis direction, h represents a distance from the optical axis to the curved surface, c represents a curvature of the apex of the curved surface, K represents a coefficient of the quadric curved surface, and B, C, D, E and F represent coefficients of the fourth, sixth, eighth, tenth and twelfth order curved surfaces respectively.

First Embodiment

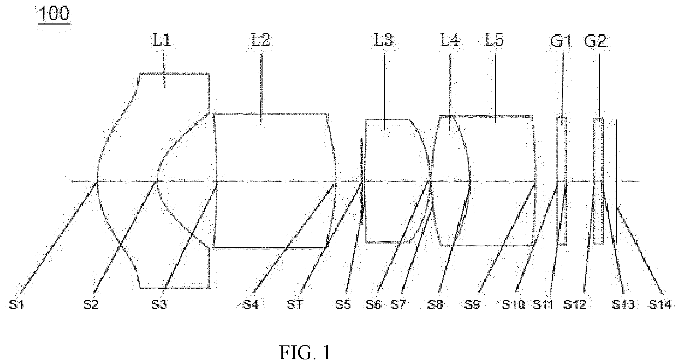

Please refer to FIG. 1 illustrating a structural schematic diagram of an optical imaging lens 100 provided in accordance with a first embodiment of this disclosure. The optical imaging lens 100, from an object side to an imaging plane along an optical axis, sequentially includes: a first lens L1, a second lens L2, a stop ST, a third lens L3, a fourth lens L4, a fifth lens L5, an optical filter G1, and a protective glass G2.

The first lens L1 has a negative focal power, the object side surface S1 thereof being convex, and the image side surface S2 thereof being concave;

The second lens L2 has a positive focal power, the object side surface S3 thereof being concave, and the image side surface S4 thereof being convex;

The third lens L3 has a positive focal power, the object side surface S5 and the image side surface S6 thereof both being convex;

The fourth lens L4 has a positive focal power, the object side surface S7 and the image side surface thereof both being convex;

The fifth lens L5 has a negative focal power, the object side surface thereof being concave and the image side surface S9 thereof being convex; and the image side surface of the fourth lens L4 and the object side surface of the fifth lens L5 are glued together to form a bonded lens, the bonding surface thereof being S8;

The object side surface S10 and the image side surface S11 of the optical filter G1 are both planes;

The object side surface S12 and the image side surface S13 of the protective glass G2 are both planes.

In order to make the lens have better imaging quality, all the five lenses in the optical imaging lens 100 of this embodiment are made of glass material. It is noted that other lens groups with glass and plastic materials combined that can achieve good imaging quality may also work.

In order to better correct the aberration of the system, the first lens L1 and the third lens L3 in the optical imaging lens 100 both adopt aspheric lenses, whereas the second lens L2, the fourth lens L4, and the fifth lens L5 all adopt spheric lenses.

The relevant parameters of each lens in the optical imaging lens 100 provided in accordance with the first embodiment of the present disclosure are listed in Table 1.

**Table 1**

| No. | | Surface Type | Radius of Curvature (mm) | Thickness (mm) | Refractive Index | Abbe Number |
|---|---|---|---|---|---|---|
| | Object Surface | Spheric | ∞ | ∞ | | |
| S1 | First Lens L1 | Aspheric | 3.88 | 2.75 | 1.81 | 40.7 |
| S2 | | Aspheric | 1.82 | 2.74 | | |
| S3 | Second Lens L2 | Spheric | -33.16 | 5.47 | 1.78 | 25.7 |
| S4 | | Spheric | -9.87 | 1.19 | | |
| ST | Stop | Spheric | ∞ | 0.12 | | |
| S5 | Third Lens L3 | Aspheric | 1.68 | 3.03 | 1.62 | 63.9 |
| S6 | | Aspheric | -5.35 | 0.07 | | |
| S7 | Fourth Lens L4 | Spheric | 10.51 | 1.77 | 1.59 | 68.5 |
| S8 | | Spheric | -6.04 | 3.01 | 1.92 | 18.9 |
| S9 | Fifth Lens L5 | Spheric | -27.93 | 1.00 | | |
| S10 | Optical Filter G1 | Spheric | ∞ | 0.40 | 1.52 | 64.2 |
| S11 | | Spheric | ∞ | 1.30 | | |
| S12 | Protective Glass G2 | Spheric | | 0.40 | 1.52 | 64.2 |
| S13 | | Spheric | | 0.02 | | |
| S14 | Imaging Plane | Spheric | ∞ | 0.00 | | |

The surface configuration parameters of each aspheric lens in this embodiment are listed in Table 2.

**Table 2**

| No. | K | B | C | D | E | F |
|---|---|---|---|---|---|---|
| S1 | -0.614 | -8.88E-04 | 4.07E-05 | -1.79E-05 | 7.39E-07 | -9.71E-09 |
| S2 | -2.161 | 2.70E-02 | -3.77E-03 | 1.97E-04 | -8.47E-07 | -1.79E-07 |
| S5 | -41.871 | -2.65E-03 | 1.57E-03 | -8.42E-04 | 1.80E-04 | -1.50E-05 |
| S6 | 1.623 | 4.03E-04 | -2.11E-05 | 1.25E-05 | -1.49E-06 | 1.14E-07 |

Second Embodiment

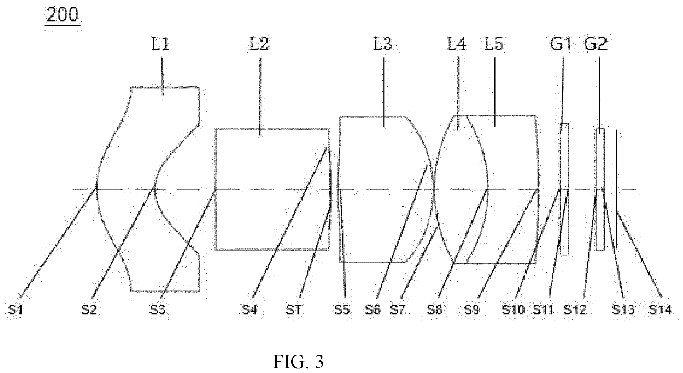

Please refer to FIG. 3 illustrating a structural schematic diagram of an optical imaging lens 200 provided in accordance with a second embodiment of this disclosure. The structure of the optical imaging lens 200 provided in the second embodiment is basically the same as that of the optical imaging lens 100 in the first embodiment. The differences therebetween lie in: a convex object side surface S3 of the second lens of the optical imaging lens 200 in this embodiment, as well as in the radius of curvature and material selection of each lens. The relevant parameters of each specific lens are listed in Table 3.

**Table 3**

| No. | | Surface Type | Radius of Curvature (mm) | Thickness (mm) | Refractive Index | Abbe Number |
|---|---|---|---|---|---|---|
| | Object Surface | Spheric | ∞ | ∞ | | |

(continued)

| No. | | Surface Type | Radius of Curvature (mm) | Thickness (mm) | Refractive Index | Abbe Number |
|---|---|---|---|---|---|---|
| S1 | First Lens L1 | Aspheric | 3.89 | 2.74 | 1.81 | 40.7 |
| S2 | | Aspheric | 1.78 | 2.88 | | |
| S3 | Second Lens L2 | Spheric | 470.01 | 5.45 | 1.78 | 25.7 |
| S4 | | Spheric | -16.98 | -0.06 | | |
| ST | Stop | Spheric | ∞ | 0.38 | | |
| S5 | Third Lens L3 | Aspheric | 17.32 | 4.50 | 1.62 | 63.9 |
| S6 | | Aspheric | -5.70 | 0.06 | | |
| S7 | Fourth Lens L4 | Spheric | 7.19 | 2.53 | 1.59 | 68.5 |
| S8 | | Spheric | -6.38 | 2.39 | 1.92 | 18.9 |
| S9 | Fifth Lens L5 | Spheric | -35.13 | 1.00 | | |
| S10 | Optical Filter G1 | Spheric | ∞ | 0.40 | 1.52 | 64.2 |
| S11 | | Spheric | ∞ | 1.30 | | |
| S12 | Protective Glass G2 | Spheric | ∞ | 0.40 | 1.52 | 64.2 |
| S13 | | Spheric | ∞ | 0.02 | | |
| S14 | Imaging Plane | Spheric | ∞ | 0.00 | | |

The surface configuration parameters of each aspheric lens in this embodiment are listed in Table 4.

**Table 4**

| No. | K | B | C | D | E | F |
|---|---|---|---|---|---|---|
| S1 | -0.506 | -1.55E-03 | -3.60E-05 | -1.71E-05 | 9.44E-07 | -1.60E-08 |
| S2 | -2.029 | 2.12E-02 | -3.96E-03 | 2.79E-04 | -4.50E-06 | -1.99E-07 |
| S5 | -3.765 | -2.47E-03 | 9.65E-04 | -5.17E-04 | 1.13E-04 | -9.30E-06 |
| S6 | 1.197 | 5.22E-04 | -5.47E-05 | 1.78E-05 | -1.73E-06 | 7.59E-08 |

Third Embodiment

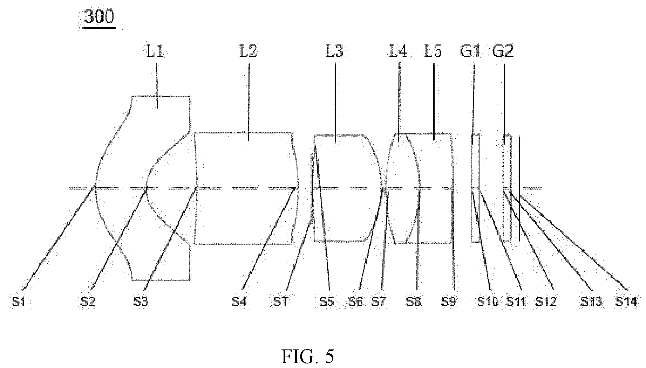

Please refer to FIG. 5 illustrating a structural schematic diagram of an optical imaging lens 300 provided in accordance with a third embodiment of this disclosure. The structure of the optical imaging lens 300 provided in the third embodiment is basically the same as that of the optical imaging lens 100 in the first embodiment. The differences therebetween lie in: the radius of curvature and material selection of each lens of the optical imaging lens 300 in this embodiment. The relevant parameters of each specific lens are listed in Table 5.

**Table 5**

| No. | | Surface Type | Radius of Curvature (mm) | Thickness (mm) | Refractive Index | Abbe Number |
|---|---|---|---|---|---|---|
| | Object Surface | Spheric | ∞ | ∞ | | |
| S1 | First Lens L1 | Aspheric | 3.83 | 2.74 | 1.81 | 40.7 |
| S2 | | Aspheric | 1.78 | 2.74 | | |
| S3 | Second Lens L2 | Spheric | -28.32 | 5.50 | 1.70 | 41.1 |
| S4 | | Spheric | -9.15 | 0.73 | | |
| ST | Stop | Spheric | ∞ | 0.02 | | |

(continued)

| No. | | Surface Type | Radius of Curvature (mm) | Thickness (mm) | Refractive Index | Abbe Number |
|---|---|---|---|---|---|---|
| S5 | Third Lens L3 | Aspheric | 12.47 | 3.74 | 1.62 | 63.9 |
| S6 | | Aspheric | -5.31 | 0.23 | | |
| S7 | Fourth Lens L4 | Spheric | 9.14 | 1.86 | 1.59 | 68.5 |
| S8 | | Spheric | -6.05 | 1.80 | 1.92 | 18.9 |
| S9 | Fifth Lens L5 | Spheric | -40.21 | 1.00 | | |
| S10 | Optical Filter G1 | Spheric | ∞ | 0.40 | 1.52 | 64.2 |
| S11 | | Spheric | ∞ | 1.30 | | |
| S12 | Protective Glass G2 | Spheric | ∞ | 0.40 | 1.52 | 64.2 |
| S13 | | Spheric | ∞ | 0.02 | | |
| S14 | Imaging Plane | Spheric | ∞ | 0.00 | | |

The surface configuration parameters of each aspheric lens in this embodiment are listed in Table 6.

**Table 6**

| No. | K | B | C | D | E | F |
|---|---|---|---|---|---|---|
| S1 | -0.615 | -9.13E-04 | 3.24E-05 | -1.73E-05 | 7.19E-07 | -9.49E-09 |
| S2 | -2.113 | 2.70E-02 | -3.76E-03 | 1.97E-04 | -4.45E-07 | -2.07E-07 |
| S5 | -27.346 | -2.40E-03 | 1.59E-03 | -8.21E-04 | 1.74E-04 | -1.44E-05 |
| S6 | 1.390 | 6.05E-04 | -9.82E-06 | 1.29E-05 | -1.46E-06 | 1.17E-07 |

Fourth Embodiment

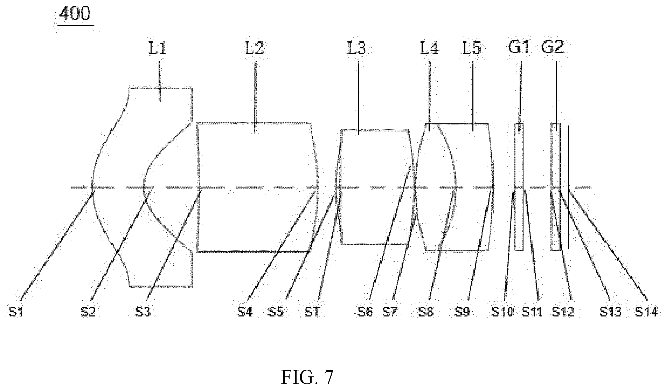

Please refer to FIG. 7 illustrating a structural schematic diagram of an optical imaging lens 400 provided in accordance with a fourth embodiment of this disclosure. The structure of the optical imaging lens 400 provided in the fourth embodiment is basically the same as that of the optical imaging lens 100 in the first embodiment. The differences therebetween lie in: the radius of curvature and material selection of each lens of the optical imaging lens 400 in this embodiment. The relevant parameters of each specific lens are listed in Table 7.

**Table 7**

| No. | | Surface Type | Radius of Curvature (mm) | Thickness (mm) | Refractive Index | Abbe Number |
|---|---|---|---|---|---|---|
| | Object Surface | Spheric | ∞ | ∞ | | |
| S1 | First Lens L1 | Aspheric | 3.55 | 2.38 | 1.81 | 40.7 |
| S2 | | Aspheric | 1.72 | 2.56 | | |
| S3 | Second Lens L2 | Spheric | -48.43 | 5.50 | 1.83 | 42.7 |
| S4 | | Spheric | -10.25 | 1.03 | | |
| ST | Stop | Spheric | ∞ | -0.20 | | |
| S5 | Third Lens L3 | Spheric | 8.22 | 3.62 | 1.69 | 54.6 |
| S6 | | Spheric | -11.89 | 0.06 | | |
| S7 | Fourth Lens L4 | Spheric | 8.30 | 1.87 | 1.59 | 68.5 |
| S8 | | Spheric | -5.06 | 1.71 | 1.92 | 18.9 |
| S9 | Fifth Lens L5 | Spheric | -17.07 | 1.00 | | |

(continued)

| No. | | Surface Type | Radius of Curvature (mm) | Thickness (mm) | Refractive Index | Abbe Number |
|---|---|---|---|---|---|---|
| S10 | Optical Filter G1 | Spheric | | 0.40 | 1.52 | 64.2 |
| S11 | | Spheric | ∞ | 1.30 | | |
| S12 | Protective Glass G2 | Spheric | ∞ | 0.40 | 1.52 | 64.2 |
| S13 | | Spheric | ∞ | 0.02 | | |
| S14 | Imaging Plane | Spheric | ∞ | 0.00 | | |

The surface configuration parameters of each aspheric lens in this embodiment are listed in Table 8.

**Table 8**

| No. | K | B | C | D | E | F |
|---|---|---|---|---|---|---|
| S1 | -0.608 | -8.59E-04 | -5.24E-05 | -2.44E-05 | 1.35E-06 | -2.24E-08 |
| S2 | -1.089 | 7.65E-03 | -1.79E-03 | -2.34E-05 | 1.85E-05 | -8.94E-07 |

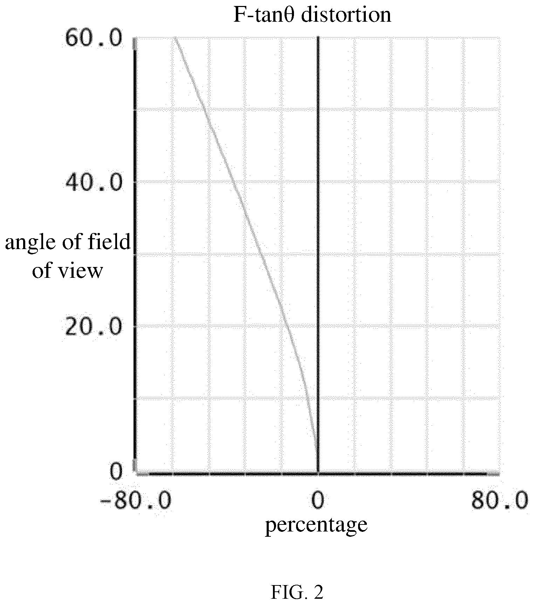

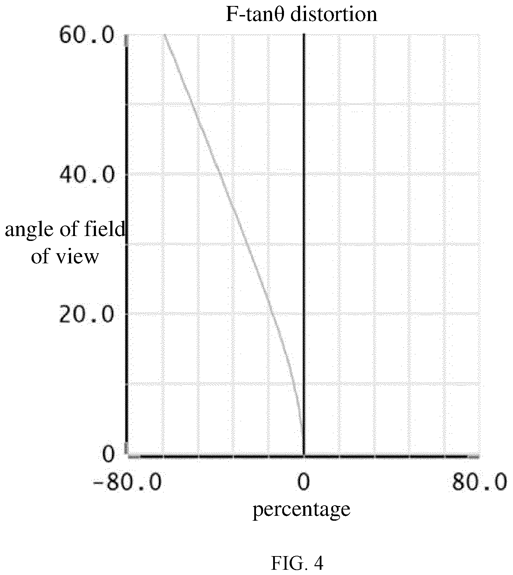

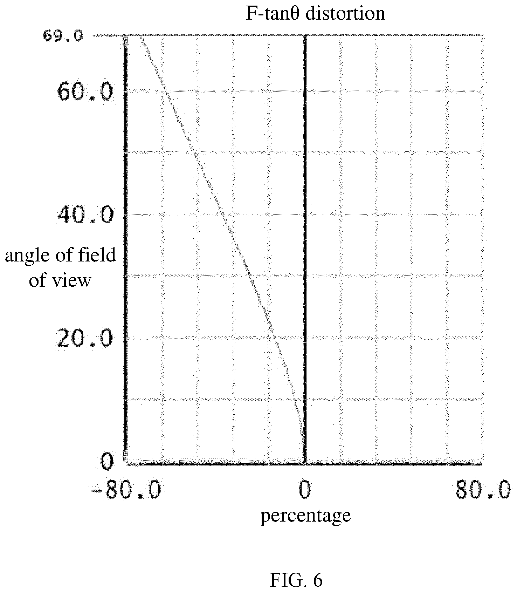

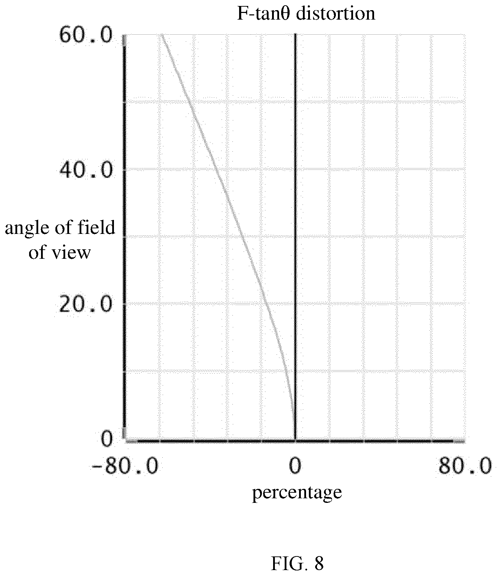

FIGS. 2, 4, 6, and 8 illustrate the F-tanθ distortion graphs of the optical imaging lens in the four embodiments respectively (where the vertical axis represents an angle of field of view, and the horizontal axis represents a distortion value). As can be seen from the F-tanθ distortions in the embodiments, the distortion increment of the lens is relatively uniform from the center field of view to the edge field of view, and the optical distortion of the optical imaging lens 100 in the full field of view is within the range of -80%-0, and is a negative distortion, indicating that the lens has a large distortion value within the range of a small field of view (near the center field of view), and the distortion value increases uniformly from the center field of view to the edge field of view. Compared with a conventional wide-angle lens, the optical imaging lens has a special form of distortion, namely, significantly increasing the distortion of the lens within the range of a small field of view, which is more conducive to meeting the special algorithm requirements of the vehicle-mounted system.

Table 9 shows the aforesaid four embodiments and their corresponding optical characteristics, including the focal length f, aperture number F #, angle of field of view FOV, and total track length TTL of the optical imaging lens, as well as the numerical values corresponding to each conditional expression above.

**Table 9**

| | First Embodiment | Second Embodiment | Third Embodiment | Fourth Embodiment |
|---|---|---|---|---|
| f (mm) | 4.442 | 4.513 | 4.206 | 4.453 |
| TTL (mm) | 23.266 | 24.003 | 22.477 | 21.66 |
| FOV (°) | 120 | 120 | 138 | 120 |
| F# | 1.505 | 1.507 | 1.503 | 1.5 |
| D1(mm) | 4.96 | 4.87 | 5.03 | 4.55 |
| R1/(R2+d1) | 0.85 | 0.86 | 0.85 | 0.87 |
| R7/R8 | -1.74 | -1.13 | -1.51 | -1.64 |
| BFL/TTL | 0.13 | 0.13 | 0.14 | 0.144 |
| R1/f | 0.87 | 0.86 | 0.91 | 0.80 |
| d4/d5 | 0.59 | 1.06 | 1.03 | 1.09 |
| d1/d12 | 1.00 | 0.95 | 1.00 | 0.93 |
| d1/TTL | 0.12 | 0.11 | 0.12 | 0.11 |
| d2/TTL | 0.24 | 0.23 | 0.24 | 0.25 |
| d3/TTL | 0.13 | 0.19 | 0.17 | 0.17 |
| d4/TTL | 0.08 | 0.11 | 0.08 | 0.09 |

(continued)

|  | First Embodiment | Second Embodiment | Third Embodiment | Fourth Embodiment |
|---|---|---|---|---|
| TTL/f | 5.24 | 5.32 | 5.34 | 4.86 |
| f1/f | -2.34 | -2.15 | -2.45 | -2.18 |
| f2/f | 3.62 | 4.61 | 4.08 | 3.26 |
| f5/f | -1.99 | -1.93 | -1.86 | -1.86 |
| f4/f5 | -0.76 | -0.70 | -0.82 | -0.67 |
| TTL/f | 5.24 | 5.32 | 5.34 | 4.82 |
| R1/R2 | 2.13 | 2.19 | 2.15 | 2.06 |
| D1/(1H×f) (mm$^{-1}$) | 0.39 | 0.37 | 0.42 | 0.36 |

In summary, the optical imaging lens provided in accordance with this disclosure at least has the following advantages:

(1) Since the special aspheric surface configuration is adopted in the first lens, this provides a special form of distortion for the lens, distinctively increasing the distortion within a small field of view, and being more conducive to meeting the special algorithm requirements of the vehicle-mounted system.

(2) The last two lenses (the fourth and fifth lenses) in the lens form a cemented lens, which is conducive to correction to chromatic aberration in the system, and also allows light beams to enter the image plane more smoothly, achieving the objective of improving the imaging quality of the system.

(3) By means of reasonable combination of the materials of various lenses, the difficulties of focal shift and significant decrease in resolution under a large temperature difference environment have been overcome, ensuring that the optical imaging lens also has excellent imaging quality under a large temperature difference environment. The use of all glass materials enables the system to have better stability, and makes the same adaptable to those fields concerning relatively harsh environments, for example, to meet the requirements in the fields such as on-board monitoring, motion camera, and unmanned aerial vehicle.

(4) By means of reasonable arrangement of the focal powers and surface configurations of the five lenses, the lens is allowed to have a larger field of view and a smaller diameter. While the resolution capability is improved to the lens as an entire group, the lens is also given the large-aperture characteristic. Under the use condition where a particular chip is combined therewith, for example, in a design of blue light removal, the system achieves the high imaging quality with a smaller number of lenses, meeting the demands for practical applications while also saving the manufacturing costs, and this is in line with the promotion and implementation of mass production.

In the description of this specification, the reference to terms such as "one embodiment", "some embodiments", "an example", "a specific example", "some examples" or the like means that the specific features, structures, materials, or characteristics described in view of the embodiment(s) or example(s) are included in at least one embodiment or example of this disclosure. In this specification, the illustrative expression of the aforesaid terms does not necessarily refer to one and the same embodiment or example. Moreover, the specific features, structures, materials, or characteristics as described can be combined in a suitable manner in any one or more embodiments or examples.

The aforesaid embodiments only express several modes of implementation of this disclosure and are described in a more specific and detailed manner, but cannot be thus understood as limitations of the scope of this disclosure. It should be pointed out that, for those skilled in the art, several deformations and improvements may be further made without departing from the concept of this disclosure, and these fall within the scope of protection of this disclosure. Therefore, the scope of protection of this disclosure should be subject to the claims attached hereto.

**Claims**

1. An optical imaging lens, from an object side to an imaging plane along an optical axis, sequentially comprising:

a first lens having a negative focal power, an object side surface of the first lens being convex, and an image side surface of the first lens being concave;
a second lens having a positive focal power, an image side surface of the second lens being convex;
a stop;
a third lens having a positive focal power, an object side surface and an image side surface of the third lens both being convex;
a fourth lens having a positive focal power, an object side surface and an image side surface of the fourth lens both being convex; and
a fifth lens having a negative focal power, an object side surface of the fifth lens being concave and an image side surface of the fifth lens being convex, and the fourth lens and the fifth lens being combined to form a cemented lens.

2. The optical imaging lens according to claim 1, wherein the object side surface of the second lens is concave.

3. The optical imaging lens according to claim 1, wherein the object side surface of the second lens is convex.

4. The optical imaging lens according to claim 1, wherein the optical imaging lens satisfies a conditional expression below:

$$0.6 < R1/(R2+d1) < 1.2;$$

where R1 represents a radius of curvature of the object side surface of the first lens, R2 represents a radius of curvature of the image side surface of the first lens, and d1 represents a center thickness of the first lens.

5. The optical imaging lens according to claim 1 or 4, wherein the optical imaging lens satisfies a conditional expression below:

$$1 < |R7/R8| < 2.5;$$

where R7 represents a radius of curvature of the object side surface of the fourth lens, and R8 represents a radius of curvature of the image side surface of the fourth lens.

6. The optical imaging lens according to claim 1, wherein the optical imaging lens satisfies a conditional expression below:

$$0 < R1/f < 1;$$

where f represents a focal length of the optical imaging lens, and R1 represents a radius of curvature of the object side surface of the first lens.

7. The optical imaging lens according to claim 1, wherein the optical imaging lens satisfies a conditional expression below:

$$0.10 < d1/TTL < 0.15;$$

where d1 represents a center thickness of the first lens, and TTL represents a total track length of the optical imaging lens.

8. The optical imaging lens according to claim 1, wherein the first lens is an aspheric lens, the object side surface of the first lens being convex in the vicinity of the optical axis and being concave away from the optical axis.

9. The optical imaging lens according to claim 1, wherein the optical imaging lens satisfies a conditional expression below:

$$1.5 < R1/R2 < 3;$$

where R1 represents a radius of curvature of the object side surface of the first lens, and R2 represents a radius of curvature of the image side surface of the first lens.

10. An optical imaging lens, from an object side to an imaging plane along an optical axis, sequentially comprising:

a first lens having a negative focal power;
a second lens having a positive focal power;
a stop;
a third lens having a positive focal power;
a fourth lens having a positive focal power; and
a fifth lens having a negative focal power, the fourth lens and the fifth lens being combined to form a cemented lens;
wherein the first lens is an aspheric lens, an object side surface of the first lens being convex in the vicinity of the optical axis and being concave away from the optical axis, and the first lens satisfies a conditional expression: $0.6<R1/(R2+d1)<1.2$; where R1 represents a radius of curvature of the object side surface of the first lens, R2 represents a radius of curvature of the image side surface of the first lens, and d 1 represents a center thickness of the first lens.

11. The optical imaging lens according to claim 10, wherein the optical imaging lens satisfies a conditional expression below:

$$0<R1/f<1$$

where f represents a focal length of the optical imaging lens, and R1 represents a radius of curvature of the object side surface of the first lens.

100

L1    L2         L3    L4  L5      G1  G2

S1    S2    S3    S4    ST    S5  S6  S7    S8    S9    S10  S11  S12    S13  S14

FIG. 1

F-tanθ distortion

FIG. 2

FIG. 3

F-tanθ distortion

FIG. 4

FIG. 5

F-tanθ distortion

FIG. 6

400

L1 L2 L3 L4 L5 G1 G2

S1 S2 S3 S4 S5 ST S6 S7 S8 S9 S10 S11 S12 S13 S14

FIG. 7

FIG. 8

## INTERNATIONAL SEARCH REPORT

| International application No. |
| --- |
| **PCT/CN2023/072520** |

**A. CLASSIFICATION OF SUBJECT MATTER**

G02B13/06(2006.01)i;G02B13/18(2006.01)i;G02B9/60(2006.01)i;G02B11/30(2006.01)i

According to International Patent Classification (IPC) or to both national classification and IPC

**B. FIELDS SEARCHED**

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNTXT; ENTXTC; JPTXT; VEN; CNABS; WPABS; DWPI: 正, "+", 负, "-", 第一、第1, L1, 第二、第2, L2, 第三、第3, L3, 第四、第4, L4, 第五、第5, L5, 非球面, 反曲点, positive, negative, first , 1st, second , 2nd, third , 3rd, fifth , 5th, fourth , 4th, aspheric, (point of inflection), (reverse curvature)

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114545604 A (JIANGXI LIANCHUANG ELECTRONICS CO., LTD.) 27 May 2022 (2022-05-27) description, paragraphs 20-146, and figures 1-8 | 1-11 |
| X | CN 111999864 A (JIANGXI LIANCHUANG ELECTRONICS CO., LTD.) 27 November 2020 (2020-11-27) description, paragraphs 72-91, and figures 2-5 | 1-11 |
| X | CN 112505894 A (XIAMEN LEADING OPTICS CO., LTD.) 16 March 2021 (2021-03-16) description, paragraphs 42-103, and figures 1-17 | 1-11 |
| A | CN 112526711 A (SUNNY OPTICAL (ZHONGSHAN) CO., LTD.) 19 March 2021 (2021-03-19) entire document | 1-11 |
| A | US 2009237807 A1 (OLYMPUS MEDICAL SYSTEMS CORP.) 24 September 2009 (2009-09-24) entire document | 1-11 |

✓ Further documents are listed in the continuation of Box C.    ✓ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **30 March 2023** | **06 May 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<table>
<tr><td colspan="2" align="center">**INTERNATIONAL SEARCH REPORT**</td><td colspan="2">International application No.<br><br>**PCT/CN2023/072520**</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">JP 3140304 U (CREATE ELECTRONIC OPTICAL CO., LTD.) 21 March 2008 (2008-03-21)<br>    entire document</td><td>1-11</td></tr>
<tr><td>A</td><td colspan="2">CN 201222114 Y (CREATE ELECTRONIC OPTICAL CO., LTD.) 15 April 2009<br>(2009-04-15)<br>    entire document</td><td>1-11</td></tr>
</table>

Form PCT/ISA/210 (second sheet) (July 2022)

INTERNATIONAL SEARCH REPORT
Information on patent family members

International application No.

**PCT/CN2023/072520**

| Patent document cited in search report | | | Publication date (day/month/year) | Patent family member(s) | | | Publication date (day/month/year) |
|---|---|---|---|---|---|---|---|
| CN | 114545604 | A | 27 May 2022 | None | | | |
| CN | 111999864 | A | 27 November 2020 | None | | | |
| CN | 112505894 | A | 16 March 2021 | None | | | |
| CN | 112526711 | A | 19 March 2021 | None | | | |
| US | 2009237807 | A1 | 24 September 2009 | JP | 2009223183 | A | 01 October 2009 |
| | | | | JP | 4695662 | B2 | 08 June 2011 |
| | | | | US | 8477436 | B2 | 02 July 2013 |
| JP | 3140304 | U | 21 March 2008 | None | | | |
| CN | 201222114 | Y | 15 April 2009 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210130287